# EUROPÄISCHE PATENTANMELDUNG

(11) **EP 4 387 197 A1**
(43) Veröffentlichungstag der Anmeldung: **19.06.2024**
(21) Anmeldenummer: 23215488.0
(22) Anmeldetag: 11.12.2023
(51) Int. Cl.: H04L 51/046, H04W 4/90

(54) **KOMMUNIKATIONSSYSTEM FÜR TEXTBASIERTE KOMMUNIKATION**

(30) Priorität: 15.12.2022 AT 509612022
(71) Anmelder: Frequentis AG, 1100 Wien (AT)
(72) Erfinder: PRINZ, Richard, 1150 Wien (AT)
(74) Vertreter: Wildhack, Andreas

(57) **Zusammenfassung**

Die Erfindung betrifft ein Kommunikationssystem (100) für textbasierte Kommunikation umfassend
- eine Kommunikationseinheit umfassend
- zumindest eine Kommunikationsschnittstelle, die dazu ausgebildet ist, Chat-Textnachrichten von einer weiteren Kommunikationseinheit zu empfangen und eingegebene Chat-Textnachrichten an eine weitere Kommunikationseinheit zu senden,
- eine Eingabeeinheit, über die von einem ersten Benutzer Chat-Textnachrichten eingebbar sind, und
- eine Anzeigeeinheit (1), auf der von der Kommunikationsschnittstelle empfangene Chat-Textnachrichten und über die Eingabeeinheit (1) eingegebene Chat-Textnachrichten als Chat anzeigbar sind,

- eine weitere Kommunikationseinheit umfassend,
- zumindest eine weitere Kommunikationsschnittstelle, die dazu ausgebildet ist, Chat-Textnachrichten von der Kommunikationseinheit zu empfangen und eingegebene Chat-Textnachrichten zu senden,
- eine weitere Eingabeeinheit, über die von einem zweiten Benutzer Chat-Textnachrichten eingebbar sind,
- eine weitere Anzeigeeinheit, auf der von der weiteren Kommunikationsschnittstelle empfangene Chat-Textnachrichten und über die weitere Eingabeeinheit eingegebene Chat-Textnachrichten als Chat anzeigbar sind, und
- wobei von der weiteren Kommunikationseinheit aus eine Chat-Applikation aufrufbar ist, wobei über die Chat-Applikation Chat-Textnachrichten an die Kommunikationseinheit absetzbar sind und wobei die Chat-Applikation dazu ausgebildet ist, graphische Benutzeroberflächen im Chat auf der weiteren Kommunikationseinheit darzustellen,

- eine zwischen die Kommunikationsschnittstelle und die weitere Kommunikationsschnittstelle geschaltete Analyse-Instanz (30),
wobei die Analyse-Instanz (30) dazu ausgebildet ist, die über die Eingabeeinheit eingegebenen Chat-Textnachrichten zu analysieren und basierend auf dieser Analyse der eingegebenen Chat-Textnachricht vor dem Weiterleiten an die weitere Kommunikationsschnittstelle Metadaten hinzuzufügen,
wobei die Chat-Applikation dazu ausgebildet ist, bei Empfang der Metadaten eine den Metadaten entsprechende graphische Benutzeroberfläche anzuzeigen.

## Beschreibung

Die Erfindung betrifft ein Kommunikationssystem für textbasierte Kommunikation gemäß Patentanspruch 1.

Neue Notruf-Arten wie z.B. NG112 ermöglichen es Benutzern bzw. Personen, die einen Notruf absetzen, unter anderem textbasiert mit einer Leitstelle zu kommunizieren, was beispielsweise für gehörlose Personen die Kommunikation mit der Leitstelle wesentlich vereinfacht. Aber auch in Situationen, in denen ein herkömmlicher, telefonischer Notruf nicht möglich ist, weil sich der Benutzer z.B. möglichst lautlos verhalten soll, ist diese Art des Notrufs vorteilhaft. Beispiele dafür sind etwa Situationen im Zusammenhang mit häuslicher Gewalt (Stiller Notruf) oder etwa bei einem Amoklauf. Ein textbasierter Notruf dauert jedoch aufgrund der Texteingabe, die zumeist auf einem Gerät mit Touchdisplay erfolgt, länger als ein telefonischer Notruf. Weiters ist, gerade in Stresssituationen, die Texteingabe oft ungenau bzw. fehlerhaft. Dies erschwert es der Leitstelle, rasch die notwendigen Informationen vom Anrufer zu bekommen, um eine Einschätzung der Notfallsituation und das Setzen entsprechender Handlungen zu ermöglichen.

Das Problem ungenauer, fehlerhafter textbasierter Kommunikation, wenn sich ein Benutzer in einer Stresssituation befindet oder nur schlecht bzw. sehr langsam mit dem Touchdisplay als Eingabegerät umgehen kann, existiert jedoch nicht nur im Zusammenhang mit dem Absetzen von textbasierten Notrufen. Ganz allgemein liegt diese Problematik im Zusammenhang mit Text-Chats vor, wenn beispielsweise Informationen gesammelt werden sollen, um eine entsprechende Reaktion bzw. Handlung setzen zu können, wie beispielsweise im Zusammenhang mit Service- und Supportleistungen.

Aufgabe der Erfindung ist es daher, die zuvor genannten Nachteile zu beheben und ein Kommunikationssystem für textbasierte Kommunikation bereitzustellen, das es ermöglicht, bei textbasierter Kommunikation präzise Informationen von einem Benutzer zu erhalten, selbst wenn der Benutzer unter großem Stress bzw. großer Anspannung steht oder mit dem von ihm genutzten Eingabemedium zur Erstellung von Textnachrichten nur schlecht umgehen kann.

Die Erfindung löst diese Aufgabe mit einem Kommunikationssystem für textbasierte Kommunikation gemäß Patentanspruch 1. Erfindungsgemäß ist dabei vorgesehen, dass das Kommunikationssystem folgende Komponenten umfasst:
- eine Kommunikationseinheit umfassend
   - zumindest eine Kommunikationsschnittstelle, die dazu ausgebildet ist, Chat-Textnachrichten von einer weiteren Kommunikationseinheit zu empfangen und eingegebene Chat-Textnachrichten an eine weitere Kommunikationseinheit zu senden,
   - eine Eingabeeinheit, über die von einem ersten Benutzer Chat-Textnachrichten eingebbar sind, und
   - eine Anzeigeeinheit, auf der von der Kommunikationsschnittstelle empfangene Chat-Textnachrichten und über die Eingabeeinheit eingegebene Chat-Textnachrichten als Chat anzeigbar sind,
- eine weitere Kommunikationseinheit umfassend,
   - zumindest eine weitere Kommunikationsschnittstelle, die dazu ausgebildet ist, Chat-Textnachrichten von der Kommunikationseinheit zu empfangen und eingegebene Chat-Textnachrichten zu senden,
   - eine weitere Eingabeeinheit, über die von einem zweiten Benutzer Chat-Textnachrichten eingebbar sind,
   - eine weitere Anzeigeeinheit, auf der von der weiteren Kommunikationsschnittstelle empfangene Chat-Textnachrichten und über die weitere Eingabeeinheit eingegebene Chat-Textnachrichten als Chat anzeigbar sind, und
   - wobei von der weiteren Kommunikationseinheit aus eine Chat-Applikation aufrufbar ist, wobei über die Chat-Applikation Chat-Textnachrichten an die Kommunikationseinheit absetzbar sind und wobei die Chat-Applikation dazu ausgebildet ist, graphische Benutzeroberflächen im Chat auf der weiteren Kommunikationseinheit darzustellen,
- eine zwischen die Kommunikationsschnittstelle und die weitere Kommunikationsschnittstelle geschaltete Analyse-Instanz,
   - wobei die Analyse-Instanz dazu ausgebildet ist, die über die Eingabeeinheit eingegebenen Chat-Textnachrichten zu analysieren und basierend auf dieser Analyse der eingegebenen Chat-Textnachricht vor dem Weiterleiten an die weitere Kommunikationsschnittstelle Metadaten hinzuzufügen,
      wobei die Chat-Applikation dazu ausgebildet ist, bei Empfang der Metadaten eine den Metadaten entsprechende graphische Benutzeroberfläche anzuzeigen.

Durch diese Ausgestaltung eines erfindungsgemäßen Kommunikationssystems ist es vorteilhafterweise möglich, kontextbezogene graphische Benutzeroberflächen im Chat auf der weiteren Kommunikationseinheit, d.h. im Chat des zweiten Benutzers anzuzeigen, um Eingaben zu verkürzen und Fehler bei Antworten an den ersten Benutzer zu verringern.

Die Analyse-Instanz analysiert dazu die vom ersten Benutzer eingegebenen Chat-Textnachrichten und fügt den Chat-Textnachrichten basierend auf dieser Analyse Metadaten hinzu, die es ermöglicht, dem zweiten Benutzer direkt im Chatverlauf eine - oder gegebenenfalls mehrere - entsprechende graphische Benutzeroberfläche anzuzeigen, die dem zweiten Benutzer ermöglicht, gezielt auf z.B. eine vom ersten Benutzer eingegebene Frage zu antworten oder dem ersten Benutzer erfragte Informationen bereitzustellen, ohne dass der zweite Benutzer dafür umfangreiche Chat-Textnachrichten einzugeben braucht.

Auf diese Weise ist vorteilhaft sichergestellt, dass auch ein zweiter Benutzer, der sich in einer Stresssituation befindet, abgelenkt ist oder nur langsam bzw. fehlerhaft Chat-Textnachrichten eingeben kann, die erforderlichen Informationen bereitstellen kann, die es dem ersten Benutzer ermöglichen, z.B. in einer Notfallsituation, oder in Situationen, in denen Service- oder Supportdienstleistungen erbracht werden sollen, richtig zu reagieren und die entsprechenden Handlungen zu setzen.

Unter einer Kommunikationseinheit wird im Zusammenhang mit der Erfindung ganz generell eine elektronische Einrichtung verstanden, die Textnachrichten senden und empfangen und die Textnachrichten für einen Benutzer darstellen kann und es einem Benutzer ermöglicht, Textnachrichten zu verfassen. Häufig handelt es sich hierbei um eine Art Arbeitsplatz z.B. in einer Einsatzleitstelle oder einem Callcenter, der mit einer oder mehreren entsprechenden Schnittstellen, einer Art Bildschirm und einem Hilfsmittel zur Texteingabe ausgestattet ist, es kann sich dabei jedoch auch um ein tragbares Endgerät wie ein Mobiltelefon, Smartphone, Tablet oder dergleichen handeln.

Ganz ähnlich ist im Zusammenhang mit der Erfindung unter einer weiteren Kommunikationseinheit eine elektronische Einrichtung zu verstehen, die Textnachrichten senden und empfangen und die Textnachrichten für einen Benutzer darstellen kann und es einem Benutzer ermöglicht, Textnachrichten zu verfassen, sowie Chat-Applikationen aufzurufen. Häufig handelt es sich hierbei um ein tragbares Endgerät wie ein Mobiltelefon, Smartphone, Tablet oder dergleichen. Es kann sich hierbei jedoch auch um eine Art Arbeitsplatz z.B. in einer Einsatzleitstelle oder einem Callcenter handeln, der mit einer oder mehreren entsprechenden Schnittstellen, einer Art Bildschirm und einem Hilfsmittel zur Texteingabe ausgestattet ist.

Unter Metadaten werden im Zusammenhang mit der Erfindung Daten verstanden, die graphische Benutzeroberflächen kennzeichnen bzw. beschreiben. Dabei kann es sich um Metadaten handeln, die quasi als Referenzdaten dienen, um eine oder mehrere graphische Benutzeroberflächen in einer Menge von graphischen Benutzeroberflächen eindeutig zu identifizieren oder um Metadaten, die eine oder mehrere graphische Benutzeroberflächen in einer Art beschreiben, dass basierend auf den Metadaten eine geeignet ausgebildete Chat-Applikation die graphischen Benutzeroberflächen erstellen bzw. darstellen kann.

Unter einer Analyse-Instanz ist im Zusammenhang mit der Erfindung eine Instanz zu verstehen, die Zugriff auf die vom ersten Benutzer an den zweiten Benutzer zu sendenden Chat-Textnachrichten, also die auf der Eingabeeinheit eingegebenen und an die weitere Kommunikationseinheit zu sendenden Chat-Textnachrichten hat und diese quasi "mitlesen" kann. Die Analyse-Instanz analysiert die Chat-Textnachrichten textuell, d.h. hinsichtlich des Inhalts der Chat-Textnachrichten - beispielsweise mittels Texterkennung oder künstlicher Intelligenz - um basierend auf dieser inhaltlichen Untersuchung bzw. Analyse weitere Schritte wie das Hinzufügen von Metadaten zu setzen.

Besonders einfach kann das Hinzufügen von Metadaten bei einem erfindungsgemäßen Kommunikationssystem gestaltet sein, wenn die Analyse-Instanz dazu ausgebildet ist, der eingegebenen Chat-Textnachricht vor dem Weiterleiten an die weitere Kommunikationsschnittstelle Metadaten in Form einer Kennung hinzuzufügen,
wobei die Kennung eine von der Chat-Applikation auf der weiteren Kommunikationseinheit darzustellende graphische Benutzeroberfläche kennzeichnet,
wobei in der Chat-Applikation zumindest eine graphische Benutzeroberfläche-jeweils mit deren zugehöriger kennzeichnender Kennung hinterlegt ist und
wobei die Chat-Applikation dazu ausgebildet ist, bei Empfang einer Kennung jeweils zumindest eine graphische Benutzeroberfläche anzuzeigen, deren Kennung der empfangenen Kennung entspricht.

Unter einer Kennung wird im Zusammenhang mit der Erfindung ein charakteristisches Merkmal oder mehrere charakteristische Merkmale verstanden, die zur eindeutigen Identifizierung einer oder mehrerer graphischer Benutzeroberflächen dienen, wie beispielsweise eine alphanumerische Zeichenfolge.

In diesem Zusammenhang kann für eine flexiblere Ausgestaltung vorgesehen sein, dass die Analyse-Instanz dazu ausgebildet ist, der eingegebenen Chat-Textnachricht vor dem Weiterleiten an die weitere Kommunikationsschnittstelle Metadaten in Form einer Software-Komponente hinzuzufügen, wobei die Chat-Applikation dazu ausgebildet ist, bei Empfang einer Software-Komponente eine entsprechende graphische Benutzeroberfläche anzuzeigen.

Unter einer Software-Komponente wird im Zusammenhang mit der Erfindung eine Art Programmcode verstanden, der mit einer Chat-Textnachricht mitübermittelt werden kann, um bei Empfang durch die Chat-Applikation von dieser verarbeitet und als graphische Benutzeroberfläche im Chat angezeigt zu werden.

Besonders flexibel einsatzfähig kann ein erfindungsgemäßes Kommunikationssystem ausgestaltet werden, wenn
- die weitere Kommunikationseinheit ein Mobilgerät, insbesondere ein Smartphone oder Tablet, ist und/oder
- von der Kommunikationseinheit aus eine Chat-Applikation aufrufbar ist, insbesondere dass auf der Kommunikationseinheit eine Chat-Applikation installiert ist,
   wobei über die Chat-Applikation Chat-Textnachrichten an die weitere Kommunikationseinheit absetzbar sind und
   wobei die Chat-Applikation vorzugsweise dazu ausgebildet ist, graphische Benutzeroberflächen im Chat darzustellen.

Gemäß einer vorteilhaften Variante eines erfindungsgemäßen Kommunikationssystems für den Einsatz in der Notfallkommunikation kann vorgesehen sein,
- dass die textbasierte Kommunikation eine textbasierte Notfallkommunikation ist und
- dass die Kommunikationseinheit in einem Operator-Arbeitsplatz für eine Einsatzleitstelle umfasst ist,
   - wobei die zumindest eine Kommunikationsschnittstelle dazu ausgebildet ist, Notrufe in Form von Chat-Textnachrichten von der weiteren Kommunikationseinheit zu empfangen und eingegebene Chat-Textnachrichten an die weitere Kommunikationseinheit zu senden,
   - wobei über die Eingabeeinheit von einem Operator als erstem Benutzer Chat-Textnachrichten an den zweiten Benutzer eingebbar sind, und
   - wobei auf der Anzeigeeinheit von der Kommunikationsschnittstelle empfangene Chat-Textnachrichten und vom Operator über die Eingabeeinheit eingegebene Chat-Textnachrichten anzeigbar sind.

Im Zusammenhang mit textbasierter Notfallkommunikation kann vorteilhaft weiters vorgesehen sein, dass
- die weitere Kommunikationseinheit ein Mobilgerät, insbesondere ein Smartphone oder Tablet ist,
   - wobei über die vom Mobilgerät aus aufrufbare Chat-Applikation Notrufe in Form einer Chat-Textnachricht an die Einsatzleitstelle absetzbar sind und
   - wobei das Mobilgerät zumindest eine Kommunikationsschnittstelle umfasst, die dazu ausgebildet ist, Notrufe in Form von eingegebenen Chat-Textnachrichten an die Kommunikationseinheit des Operator-Arbeitsplatzes zu senden und Chat-Textnachrichten von der Kommunikationseinheit des Operator-Arbeitsplatzes zu empfangen.

Ein gezielteres, verbessertes Abfragen von Informationen kann im Zusammenhang mit textbasierter Kommunikation erzielt werden, wenn die Analyse-Instanz dazu ausgebildet ist, die über die weitere Eingabeeinheit eingegebenen Chat-Textnachrichten zu analysieren und basierend auf dieser Analyse in einem Speicher der Analyse-Instanz und/oder in einem Speicher der ersten Kommunikationseinheit hinterlegte Chat-Textnachrichten, insbesondere hinterlegte Chat-Textnachrichten aus einem Fragenkatalog, und/oder Metadaten auf der weiteren Kommunikationseinheit darzustellender graphischer Benutzeroberflächen auszuwählen und an die weitere Kommunikationseinheit zu senden.

Auf diese Weise wird die Möglichkeit bereitgestellt, beispielsweise automatisiert hinterlegte Fragenkataloge abzuarbeiten, bevor der erste Benutzer seine Fragen in Form von Chat-Textnachrichten an den zweiten Benutzer schickt bzw. zusätzlich zu den vom ersten Benutzer erstellten Chat-Textnachrichten. Dies erleichtert dem ersten Benutzer die Einschätzung der Situation weiter und reduziert zusätzlich die Arbeitsbelastung für den ersten Benutzer.

Besonders einfach und intuitiv für den zweiten Benutzer zu bedienen können die graphischen Benutzeroberflächen ausgestaltet werden, wenn von der Chat-Applikation darzustellenden graphischen Benutzeroberflächen GUI-Widgets sind.

Unter einem GUI-Widget (GUI engl. für *graphical user interface*) wird im Zusammenhang mit der Erfindung eine graphische Benutzeroberfläche mit einem Interaktionselement wie z.B. einem Steuerelement oder Bedienelement, beispielsweise einer Schaltfläche oder einer Bildlaufleiste, verstanden.

Um es dem ersten Benutzer zu ermöglichen, auf verschiedenste Fragestellungen bzw. in unterschiedlichsten Situationen die entsprechenden Informationen vom zweiten Benutzer erhalten zu können, während gleichzeitig eine einfache, verständliche Bedienung für den zweiten Benutzer sichergestellt ist, kann vorgesehen sein, dass die graphischen Benutzeroberflächen, insbesondere die GUI-Widgets, eines oder mehrere der folgenden Elemente umfassen:
- eine Ja/Nein-Frage,
- eine Datums- und/oder Zeit-Auswahl,
- einen Zahlenbereich,
- eine Mehr/weniger-Frage,
- eine geographische Karte zur manuellen Auswahl einer Position über die weitere Eingabeeinheit,
- eine schematische Darstellung einer Person zur Auswahl eines Körperteils über die weitere Eingabeeinheit,
- ein Bild,
- ein Piktogramm,
- ein Video,
- eine Audiodatei zur Ausgabe über einen Lautsprecher der weiteren Kommunikationseinheit.

Eine sichere und zuverlässige Möglichkeit, die Interaktion des zweiten Benutzers mit der graphischen Benutzeroberfläche im Chat auf der weiteren Kommunikationseinheit an den ersten Benutzer bzw. die Kommunikationseinheit zu übermitteln, kann bereitgestellt werden, wenn die Analyse-Instanz dazu ausgebildet ist, eine über die weitere Eingabeeinheit vom zweiten Benutzer vorgenommene Interaktion mit der graphischen Benutzeroberfläche im Chat festzustellen und die Interaktion mit der graphischen Benutzeroberfläche
- in eine der Interaktion entsprechende Chat-Textnachricht umzuwandeln und an die Kommunikationseinheit zu übermitteln und/oder
- der Interaktion entsprechende Metadaten zu erzeugen und an die Kommunikationseinheit zu übermitteln.

Eine zusätzliche und/oder alternative Variante, die Interaktion des zweiten Benutzers mit der graphischen Benutzeroberfläche im Chat auf der weiteren Kommunikationseinheit zuverlässig an den ersten Benutzer bzw. die Kommunikationseinheit zu übermitteln, kann bereitgestellt werden, wenn, die Chat-Applikation dazu ausgebildet ist, eine über die weitere Eingabeeinheit vom zweiten Benutzer vorgenommene Interaktion mit der graphischen Benutzeroberfläche im Chat festzustellen und die Interaktion mit der graphischen Benutzeroberfläche in eine der Interaktion entsprechende Chat-Textnachricht umzuwandeln und an die Kommunikationseinheit zu übermitteln.

Im Zusammenhang mit der Anzeige der vom zweiten Benutzer auf der weiteren Kommunikationseinheit bereitgestellten Informationen kann vorteilhaft vorgesehen sein, dass die Chat-Applikation der Kommunikationseinheit dazu ausgebildet ist, von der Analyse-Instanz übermittelte Metadaten zu verarbeiten und auf der Anzeigeeinheit für den ersten Benutzer anzuzeigen.

Um auch dem ersten Benutzer bzw. auf der Kommunikationseinheit die Möglichkeit bereitzustellen, graphische Benutzeroberflächen auszuwählen, die dem zweiten Benutzer bzw. auf der weiteren Kommunikationseinheit angezeigt werden sollen, kann vorteilhafterweise vorgesehen sein, dass die Kommunikationseinheit und/oder die Analyse-Instanz einen Speicher umfasst,
- wobei im Speicher graphische Benutzeroberflächen, insbesondere GUI-Widgets, mit deren zugehörigen kennzeichnenden Metadaten, insbesondere deren Kennung, hinterlegt sind,
- wobei bei Eingabe einer Chat-Textnachrichten vom ersten Benutzer über die Eingabeeinheit im Speicher hinterlegte graphische Benutzeroberflächen wählbar sind und
- wobei die Analyse-Instanz dazu ausgebildet ist, bei Auswahl zumindest einer graphischen Benutzeroberfläche über die Eingabeeinheit der eingegebenen Chat-Nachricht eine der zumindest einen gewählten graphischen Benutzeroberfläche entsprechende Metadaten hinzuzufügen, insbesondere der eingegebenen Chat-Textnachricht eine Kennung und/oder Software-Komponente hinzuzufügen, die der gewählten graphischen Benutzeroberfläche entspricht.

Wird nicht nur der Inhalt der an den zweiten Benutzer übermittelten Chat-Textnachrichten analysiert, sondern wird zusätzlich auch dem ersten Benutzer die Möglichkeit geboten, aktiv graphische Benutzeroberflächen auszuwählen, kann vorteilhafterweise der Informationsgewinn maximiert werden.

Eine besonders flexible Ausgestaltung eines erfindungsgemäßen Kommunikationssystems kann gewährleistet werden, wenn die Analyse-Instanz
- in der Kommunikationseinheit integriert ist, oder
- auf einem externen Server untergebracht ist, oder
- in der weiteren Kommunikationseinheit integriert ist.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnung beispielhaft beschrieben.

Im Folgenden zeigt schematisch:

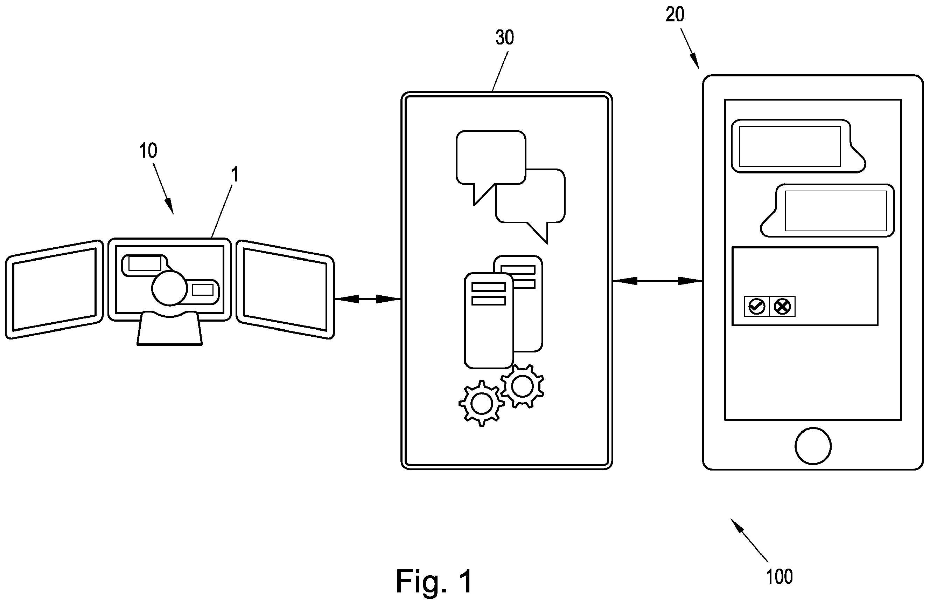

Fig. 1 ein Ausführungsbeispiel eines erfindungsgemäßen Kommunikationssystems.

Fig. 1 zeigt ein Ausführungsbeispiel eines erfindungsgemäßen Kommunikationssystems 100, das im Zusammenhang mit textbasierter Notrufkommunikation eingesetzt wird. In Fig. 1 ist ein Operator-Arbeitsplatz 10 dargestellt, der eine Kommunikationseinheit umfasst. Ein derartiger Operator-Arbeitsplatz 10 kann beispielsweise in einer Einsatzleitstelle der Polizei, Rettung, Feuerwehr oder dergleichen genutzt werden. Der Operator-Arbeitsplatz 10 wird im Ausführungsbeispiel von einem Operator einer Rettungsleitstelle als erstem Benutzer bedient.

Die Kommunikationseinheit des Operator-Arbeitsplatzes 10 weist eine Kommunikationsschnittstelle auf, über die Notrufe in Form von Chat-Textnachrichten von einem Notrufenden als zweitem Benutzer empfangen werden und Antworten auf derartige Notrufe, ebenfalls in Form von Chat-Textnachrichten, gesendet werden können.

Weiters umfasst die Kommunikationseinheit eine Eingabeeinheit wie beispielsweise einen Touchscreen oder im einfachsten Fall eine Tastatur, über die der Operator Chat-Textnachrichten an einen Notrufenden eingeben kann. Die Kommunikationseinheit umfasst auch eine Anzeigeeinheit 1 in Form eines Bildschirms, auf der die vom Notrufenden am Operator-Arbeitsplatz 10 eingehenden Chat-Textnachrichten, sowie die Chat-Textnachrichten, die der Operator eingibt, angezeigt werden. Selbstverständlich kann eine Kommunikationseinheit optional auch mehrere Anzeigeeinheiten bzw. mehrere Bildschirme umfassen.

Im Ausführungsbeispiel wird von einem Notrufenden, der Zeuge bei einem Unfall ist, ein Notruf in Form einer Chat-Textnachricht abgesetzt. Der Notrufende benutzt dazu eine weitere Kommunikationseinheit, bei der es sich im Ausführungsbeispiel um ein Mobilgerät in Form eines Smartphones 20 handelt.

Vom Smartphone 20 aus ist eine Chat-Applikation aufrufbar, über die eingegebene Notrufe als Chat-Textnachrichten an den Operator bzw. die Kommunikationseinheit des Operator-Arbeitsplatzes 10 gesendet werden können. Im Ausführungsbeispiel ist die Chat-Applikation auf dem Smartphone 20 des Notrufenden installiert. Alternativ dazu kann die Chat-Applikation jedoch auch auf einem externen Server bereitgestellt werden, auf den vom Smartphone 20 aus zugegriffen werden kann. Die Chat-Applikation ist so programmiert bzw. ausgebildet, dass sie graphische Benutzeroberflächen direkt im Chat bzw. im Chat-Verlauf auf dem Smartphone anzeigen kann.

Das Mobilgerät verfügt über ähnliche Komponenten wie die Kommunikationseinheit, nämlich über eine weitere Kommunikationsschnittstelle, über die Notrufe in Form von Chat-Textnachrichten an den Operator bzw. die Kommunikationseinheit des Operator-Arbeitsplatzes 10 gesendet werden und Antworten in Form von Chat-Textnachrichten vom Operator bzw. von der Kommunikationseinheit des Operator-Arbeitsplatzes 10 empfangen werden können.

Der Touchscreen des Smartphones 20 dient als Eingabeeinheit, über die der Notrufende Chat-Textnachrichten eingeben kann, sowie als Anzeigeeinheit, auf der dem Notrufenden von ihm eingegebene sowie empfangene Chat-Textnachrichten in Form eines Chats bzw. Chatverlaufs angezeigt werden.

Eine Analyse-Instanz 30 ist zwischen die Kommunikationsschnittstelle des Operator-Arbeitsplatzes 10 und die weitere Kommunikationsschnittstelle des Smartphones 20 geschaltet. Im Ausführungsbeispiel ist die Analyse-Instanz 30 auf einem externen Server untergebracht. Die Analyse-Instanz 30 kann aber optional auch in der Kommunikationseinheit oder der weiteren Kommunikationseinheit integriert sein.

Die Analyse-Instanz 30 greift auf die über die Eingabeeinheit eingegebenen Chat-Textnachrichten zu und analysiert diese. Für diese Analyse kommen verschiedene Herangehensweisen wie beispielsweise der Einsatz von Texterkennungsverfahren oder der Einsatz von künstlicher Intelligenz in Frage. Für eine derartige Textanalyse sind eine Vielzahl von fertigen Programmkomponenten bekannt, die in der Analyse-Instanz 30 implementiert werden können.

Basierend auf der textuellen Analyse der Chat-Textnachricht, die der Operator erstellt hat, fügt die Analyse-Instanz 30 der vom Operator eingegebenen Chat-Textnachricht Metadaten hinzu, bevor die Chat-Textnachricht an die weitere Kommunikationsschnittstelle des Smartphones 20 gesendet wird. Im Ausführungsbeispiel handelt es sich bei diesen Metadaten um eine Kennung, die eine oder mehrere graphische Benutzeroberfläche(n) kennzeichnet, die von der Chat-Applikation auf dem Smartphone 20 im Chat bzw. im Chat-Verlauf dargestellt werden soll.

Bei dieser Kennung handelt es sich im Ausführungsbeispiel um eine einfache alphanumerische Zeichenkette bzw. ID, die bei Empfang die Chat-Applikation auf dem Smartphone 20 dazu veranlasst, zumindest eine zugehörende graphische Benutzeroberfläche bzw. GUI-Komponente anzuzeigen, d.h. zumindest eine graphische Benutzeroberfläche anzuzeigen, deren Kennung der empfangenen Kennung entspricht.

Dazu sind im Ausführungsbeispiel die graphischen Benutzeroberflächen bzw. GUI-Komponenten in der Chat-Applikation beim Notrufenden bzw. auf dem Mobilgerät bereits jeweils mit deren zugehöriger kennzeichnender Kennung hartcodiert hinterlegt. Diese Lösung ist einfach in der Umsetzung und neue GUI-Komponenten können durch Ändern bzw. Ergänzen der Chat-Applikation hinzufügt werden.

Zusätzlich oder alternativ zu Metadaten in Form einer Kennung kann die Analyse-Instanz 30 der eingegebenen Chat-Textnachricht Metadaten in Form einer Software-Komponente hinzuzufügen. Bei dieser Software-Komponente kann es sich beispielsweise um eine direkte Beschreibung der anzuzeigenden graphischen Benutzeroberfläche bzw. GUI-Komponente beispielsweise als HTML handeln. Die Chat-Applikation zeigt dann bei Empfang der Software-Komponente eine diesem Programmcode entsprechende graphische Benutzeroberfläche an. In diesem Fall ist die Chat-Applikation beim Notrufenden bzw. auf dem Mobilgerät mit der Funktionalität ausgestattet, diese Beschreibung darzustellen.

Wie zuvor bereits erwähnt, setzt der Notrufende mit seinem Smartphone 20 einen Notruf in Form einer Chat-Textnachricht über die Chat-Applikation ab, da er Zeuge eines Unfalls geworden ist. Der Notrufende gibt dazu die Chat-Textnachricht "Wir brauchen einen Rettungswagen, ein Mann wurde bei einem Unfall verletzt" ein.

Von der Kommunikationsschnittstelle des Operator-Arbeitsplatzes 10 in der Rettungsleitstelle wird der textbasierte Notruf des Notrufenden empfangen und auf der Anzeigeeinheit 1 des Operator-Arbeitsplatzes 10 dargestellt bzw. angezeigt. Nachdem das Unfallopfer verletzt ist, versucht der Operator nähere Informationen zu erhalten, ob bzw. wie schwer das Unfallopfer verletzt ist, um den Notrufenden beim Leisten von erster Hilfe zu unterstützen.

Der Operator gibt daher über die Eingabeeinheit die Chat-Textnachricht "Ist die Person bei Bewusstsein?" ein. Die Analyse-Instanz 30, die zwischen die Kommunikationsschnittstelle des Operator-Arbeitsplatzes 10 und die weitere Kommunikationsschnittstelle des Smartphones 20 geschaltet ist, erkennt die vom Operator eingegebene Nachricht und analysiert den Text. Basierend auf dieser Analyse stellt die Analyse-Instanz 30 fest, dass es sich hierbei um eine Ja-/Nein-Frage handelt und dass dem Notrufenden eine entsprechende graphische Benutzeroberfläche angezeigt werden soll, über die er als Antwort "Ja" oder "Nein" eingeben kann.

Die Analyse-Instanz fügt der Nachricht des Operators an den Notrufenden dementsprechend Metadaten in Form der alphanumerischen Kennung 1X9Z28 hinzu, die einem GUI-Widget entspricht, das dem Notrufenden die Möglichkeit gibt, "Ja" oder "Nein" auf dem Bildschirm seines Smartphones 20 anzutippen und auf diese Weise die Frage des Operators zu beantworten, ohne eine Chat-Textnachricht eingeben zu müssen.

Anschließend wird die Chat-Textnachricht samt den hinzugefügten Metadaten von der Kommunikationsschnittstelle des Operator-Arbeitsplatzes 10 an die weitere Kommunikationsschnittstelle des Smartphones 20 übermittelt und von der Chat-Applikation verarbeitet. Von der Chat-Applikation werden im Chat bzw. im Chat-Verlauf die Frage des Operators und die der mitübermittelten Kennung entsprechende graphische Benutzeroberfläche angezeigt, bei der es sich um das Ja-/Nein-GUI-Widget handelt, das in Fig. 1 dargestellt ist. Die Antwortmöglichkeit "Ja" ist im Ausführungsbeispiel durch eine Taste in Form eines Kreises mit einem Häkchen darin gekennzeichnet, während "Nein" durch eine Taste in Form eines Kreises mit einem X darin gekennzeichnet ist.

Die Verarbeitung der Interaktion des Notrufenden mit dem GUI-Widget wird im Ausführungsbeispiel von der Chat-Applikation auf der weiteren Kommunikationseinheit übernommen. Die Chat-Applikation erkennt dazu eine über die weitere Eingabeeinheit, also den Touchscreen, vom Notrufenden vorgenommene Interaktion mit dem GUI-Widget im Chat, wandelt diese Interaktion in eine entsprechende Chat-Textnachricht um und übermittelt diese an die Kommunikationseinheit des Operator-Arbeitsplatzes 10.

Die Interaktion des Notrufenden mit dem GUI-Widget, d.h. welchen Button er im Ja-/Nein-GUI-Widget im Ausführungsbeispiel drückt, wird so an den Operator übermittelt. Dies erfolgt im Ausführungsbeispiel in Form einer einfachen Textnachricht, d.h. da der Notrufende die "Ja"-Taste gedrückt hat, wird an den Operator die Chat-Textnachricht "JA" übermittelt.

Zusätzlich oder alternativ dazu ist es auch möglich, dass anstelle oder zusätzlich zu der Chat-Textnachricht als Antwort Metadaten gesendet werden. In diesem Fall übernimmt die Analyse-Instanz 30 die Verarbeitung der vom Notrufenden vorgenommenen Interaktion mit der graphischen Benutzeroberfläche im Chat auf der weiteren Kommunikationseinheit. Die Analyse-Instanz 30 erzeugt dann der Antwort des Notrufenden entsprechende Metadaten und übermittelt diese an den Operator-Arbeitsplatz 10 bzw. an die Leitstelle, die dort entsprechend angezeigt werden.

Nachdem dem Operator auf der Anzeigeeinheit 1 des Operator-Arbeitsplatzes 10 die Chat-Textnachricht "JA" angezeigt wird, gibt er als nächste Chat-Textnachricht die Frage "Wo ist die Person verletzt?" ein. Die Analyse-Instanz 30 erkennt die vom Operator eingegebene Nachricht und stellt basierend auf der Analyse des Textes fest, dass dem Notrufenden eine graphische Benutzeroberfläche angezeigt werden soll, auf der er Körperregionen auswählen kann.

Die Analyse-Instanz 30 fügt der Nachricht des Operators an den Notrufenden dementsprechend Metadaten in Form der alphanumerischen Kennung 5A345BB hinzu, die einem GUI-Widget entspricht, das einer schematischen Darstellung einer Person entspricht, auf der der Notrufende Körperteile durch Tippen auf den Bildschirm seines Smartphones 20 auswählen kann.

Anschließend wird die Chat-Textnachricht samt den hinzugefügten Metadaten an die weitere Kommunikationsschnittstelle des Smartphones 20 übermittelt und von der Chat-Applikation wird im Chat das den Metadaten entsprechende GUI-Widget mit einer schematischen Darstellung einer Person angezeigt. Der Notrufende berührt auf der Eingabeeinheit bzw. dem Touchscreen seines Smartphones 20 den linken Arm der dargestellten Person und gibt die Chat-Textnachricht "Er blutet" ein.

Wieder wird die Interaktion des Notrufenden mit dem GUI-Widget an den Operator übermittelt. Die Chat-Applikation erkennt die über die den Touchscreen vom Notrufenden vorgenommene Interaktion mit dem GUI-Widget im Chat, wandelt diese Interaktion in die entsprechende Chat-Textnachricht "LINKER ARM" um und übermittelt diese an die Kommunikationseinheit des Operator-Arbeitsplatzes 10.

Im Ausführungsbeispiel werden zusätzlich zu der Chat-Textnachricht von der Analyse-Instanz 30 als Antwort Metadaten gesendet. Die Analyse-Instanz 30 verarbeitet die vom Notrufenden vorgenommene Interaktion mit der graphischen Benutzeroberfläche im Chat auf der weiteren Kommunikationseinheit und erzeugt als Antwort an den Operator Metadaten in Form der alphanumerischen Kennung 5A345BBLA und übermittelt diese an den Operator-Arbeitsplatz 10 bzw. an die Leitstelle. Auf der Anzeigeeinheit 1 des Operator-Arbeitsplatzes 10 wird eine schematische Darstellung einer Person angezeigt, auf der der linke Arm markiert ist.

Dazu kann optional die Kommunikationseinheit bzw. der Operator-Arbeitsplatz 10 auch über eine Chat-Applikation verfügen, die von der Analyse-Instanz 30 übermittelte Metadaten verarbeiten und auf der Anzeigeeinheit 1 für den Operator im Chat anzeigen kann. Dies ist jedoch optional und es ist für die Funktionsweise eines erfindungsgemäßen Kommunikationssystems 100 ausreichend, wenn auf der Kommunikationseinheit bzw. dem Operator-Arbeitsplatz 10 Chat-Textnachrichten als einfacher Text angezeigt werden bzw. wenn eine Chat-Applikation installiert oder von der Kommunikationseinheit aufrufbar ist, die Chat-Textnachrichten für den Operator anzeigt.

Nachdem dem Operator auf der Anzeigeeinheit 1 des Operator-Arbeitsplatzes 10 die Chat-Textnachrichten "LINKER ARM" und "Er blutet" sowie die schematische Darstellung einer Person mit Markierungen angezeigt werden, gibt er als nächste Chat-Textnachricht die Angabe "Ich sende ein Video, das zeigt, wie Sie die Blutung stillen können" ein. Die Analyse-Instanz 30 erkennt die vom Operator eingegebene Nachricht und stellt basierend auf der Analyse des Textes fest, dass dem Notrufenden ein Video angezeigt werden soll, in dem die richtige Verbandstechnik erklärt wird.

Die Analyse-Instanz 30 fügt der Nachricht des Operators an den Notrufenden dementsprechend Metadaten in Form der alphanumerischen Kennung 1CVVV5L hinzu, die einer graphischen Benutzeroberfläche entspricht, das ein entsprechendes Erklärvideo im Chat des Notrufenden anzeigt.

Auf diese Weise ist es dem Operator mit einem erfindungsgemäßen Kommunikationssystem 100 vorteilhaft möglich, gezielt Informationen zu erhalten und Anweisungen zu geben, im Fall, dass ein Notrufender bei der Einsatzleitstelle einen textbasierten Notruf absetzt. Weitere Arten von graphischen Benutzeroberflächen bzw. GUI-Widgets, die im Chat auf der weiteren Kommunikationseinheit angezeigt werden können, umfassen beispielsweise die Anzeige
- einer Datums- und/oder Zeit-Auswahl
- eines Zahlenbereichs (1, 2, 3, n), um beispielsweise die Anzahl von verletzten Personen zu erfragen,
- eine Mehr/Weniger Frage
- eine Karte zur manuellen Auswahl einer Position, was besonders vorteilhaft ist, wenn beispielsweise die GPS-Funktion der weiteren Kommunikationseinheit des Notrufenden ausgefallen ist oder die weitere Kommunikationseinheit noch über keine GPS-Funktion verfügt,
- von graphischen Benutzeroberflächen, die keine Benutzer-Interaktion ermöglichen, wie etwa die Anzeige von Bildern, Piktogrammen, Videos oder die Ausgabe von Audiodateien.

Ein weiterer Vorteil der Anwendung eines erfindungsgemäßen Kommunikationssystems 100 ist, dass eine teilweise Automatisierung beispielsweise eines Notrufs ermöglicht wird. Viele Einsatzleitstellen, z.B. der Rettung, arbeiten bei einem Notruf einen vorgegebenen Fragenkatalog ab. Dabei ergeben die Antworten des Notrufenden die nächsten gestellten Fragen, also eine Art Entscheidungsbaum. Viele dieser Fragen können durch graphische Oberflächen wie GUI-Widgets visualisiert werden. Auf diese Weise kann die Einsatzleitstelle bereits automatisch die wichtigsten Angaben ermitteln, bevor der Operator dann den textbasierten Notruf tatsächlich übernimmt.

In diesem Fall analysiert die Analyse-Instanz 30 nicht nur die über die Eingabeeinheit vom Operator auf der Kommunikationseinheit eingegebenen Chat-Textnachrichten, sondern auch die über die weitere Eingabeeinheit eingegebenen Chat-Textnachrichten des Notrufenden. Basierend auf dieser Analyse wählt die Analyse-Instanz 30 in einem Speicher hinterlegte Chat-Textnachrichten beispielsweise aus einem Fragenkatalog, aus und sendet sie an die weitere Kommunikationseinheit des Notrufenden. Ergänzend oder anstelle von Chat-Textnachrichten kann die Analyse-Instanz 30 selbstverständlich auch für den Notrufenden auf der weiteren Kommunikationseinheit darzustellende graphische Benutzeroberflächen auswählen und die entsprechenden Metadaten an die weitere Kommunikationseinheit übermitteln. Der betreffende Speicher kann sich beispielsweise in der Analyse-Instanz 30 und/oder in der ersten Kommunikationseinheit untergebracht sein.

Obwohl das beschriebene Ausführungsbeispiel die Funktionsweise eines erfindungsgemäßen Kommunikationssystems 100 im Zusammenhang mit textbasierter Notfallkommunikation näher erläutert, kann ein erfindungsgemäßes Kommunikationssystem 100 auch in anderen Anwendungsbereichen eingesetzt werden.

So kann ein erfindungsgemäßes Kommunikationssystem 100 beispielsweise im Zusammenhang mit technischen Service- oder Supportanfragen vorteilhaft genutzt werden, in denen von einem Callcenter oder Helpdesk aus Unterstützung bei technischen Problemen mit komplexen Laborgeräten oder auch üblichen Haushaltsgeräten wie Waschmaschinen und dergleichen angeboten wird. Auch in diesem Zusammenhang ist es wünschenswert, wenn ein Kundendienstmitarbeiter als erster Benutzer von einem Gerätenutzer als zweitem Benutzer gezielt Informationen zum Gerätetyp bzw. zum aufgetretenen technischen Problem abfragen kann.

Optional ist es selbstverständlich auch möglich, dass die übermittelten Metadaten nicht nur eine einzelne, sondern mehrere graphische Benutzeroberflächen wie GUI-Widgets kennzeichnen, die dem Benutzer angezeigt werden sollen. So können beispielsweise im Zusammenhang mit Support- oder Serviceanfragen auf die Anfrage des ersten Benutzers bzw. Kundendienstmitarbeiters "Handelt es sich um den Gerätetyp "LAVA50"?" Metadaten übermittelt werden, die die Chat-Applikation auf der weiteren Kommunikationseinheit des zweiten Benutzers veranlasst, eine Ja-/Nein-Frage anzuzeigen, sowie ein Piktogramm, auf dem dargestellt ist, wo auf dem betreffenden Gerät die Typennummer zu finden ist.

Weiters besteht optional die Möglichkeit, dass vom ersten Benutzer bei Eingabe einer Chat-Textnachrichten über die Eingabeeinheit im Chat auf der weiteren Kommunikationseinheit für den zweiten Benutzer anzuzeigende graphische Benutzeroberflächen selbst ausgewählt werden. Dazu wählt der erste Benutzer beispielsweise unter in einem Speicher mit den zugehörigen Metadaten hinterlegten graphischen Benutzeroberflächen wie z.B. GUI-Widgets, eine gewünschte graphische Benutzeroberfläche aus und die Analyse-Instanz fügt der über die Eingabeeinheit vom ersten Benutzer eingegebenen Chat-Textnachricht dann der gewählten graphischen Benutzeroberfläche entsprechende Metadaten hinzu. Der Speicher kann sich beispielsweise in der Kommunikationseinheit und/oder in der Analyse-Instanz befinden bzw. von dieser umfasst sein.

So kann beispielsweise im Zusammenhang mit Support- oder Serviceanfragen auf die Angabe des ersten Benutzers bzw. Servicemitarbeiters "Bei Ihrem Gerätetyp ist der USB-Anschluss links hinten am Gerät zu finden" der erste Benutzer eine graphische Benutzeroberfläche aus dem Speicher auswählen, die ein Piktogramm der Lage der Anschlüsse auf dem Gerät zeigt und von der Analyse-Instanz werden dann die entsprechenden Metadaten übermittelt werden, die die Chat-Applikation auf der weiteren Kommunikationseinheit des zweiten Benutzers veranlasst, das Piktogramm anzuzeigen.

## Patentansprüche

1. Kommunikationssystem (100) für textbasierte Kommunikation umfassend
- eine Kommunikationseinheit umfassend
- zumindest eine Kommunikationsschnittstelle, die dazu ausgebildet ist, Chat-Textnachrichten von einer weiteren Kommunikationseinheit zu empfangen und eingegebene Chat-Textnachrichten an eine weitere Kommunikationseinheit zu senden,
- eine Eingabeeinheit, über die von einem ersten Benutzer Chat-Textnachrichten eingebbar sind, und
- eine Anzeigeeinheit (1), auf der von der Kommunikationsschnittstelle empfangene Chat-Textnachrichten und über die Eingabeeinheit (1) eingegebene Chat-Textnachrichten als Chat anzeigbar sind,
- eine weitere Kommunikationseinheit umfassend,
- zumindest eine weitere Kommunikationsschnittstelle, die dazu ausgebildet ist, Chat-Textnachrichten von der Kommunikationseinheit zu empfangen und eingegebene Chat-Textnachrichten zu senden,
- eine weitere Eingabeeinheit, über die von einem zweiten Benutzer Chat-Textnachrichten eingebbar sind,
- eine weitere Anzeigeeinheit, auf der von der weiteren Kommunikationsschnittstelle empfangene Chat-Textnachrichten und über die weitere Eingabeeinheit eingegebene Chat-Textnachrichten als Chat anzeigbar sind, und
- wobei von der weiteren Kommunikationseinheit aus eine Chat-Applikation aufrufbar ist, wobei über die Chat-Applikation Chat-Textnachrichten an die Kommunikationseinheit absetzbar sind und wobei die Chat-Applikation dazu ausgebildet ist, graphische Benutzeroberflächen im Chat auf der weiteren Kommunikationseinheit darzustellen,
- eine zwischen die Kommunikationsschnittstelle und die weitere Kommunikationsschnittstelle geschaltete Analyse-Instanz (30),
wobei die Analyse-Instanz (30) dazu ausgebildet ist, die über die Eingabeeinheit eingegebenen Chat-Textnachrichten zu analysieren und basierend auf dieser Analyse der eingegebenen Chat-Textnachricht vor dem Weiterleiten an die weitere Kommunikationsschnittstelle Metadaten hinzuzufügen,
wobei die Chat-Applikation dazu ausgebildet ist, bei Empfang der Metadaten eine den Metadaten entsprechende graphische Benutzeroberfläche anzuzeigen.

2. Kommunikationssystem (100) nach Anspruch 1, **dadurch gekennzeichnet, dass** die Analyse-Instanz (30) dazu ausgebildet ist, der eingegebenen Chat-Textnachricht vor dem Weiterleiten an die weitere Kommunikationsschnittstelle Metadaten in Form einer Kennung hinzuzufügen,
wobei die Kennung eine von der Chat-Applikation auf der weiteren Kommunikationseinheit darzustellende graphische Benutzeroberfläche kennzeichnet,
wobei in der Chat-Applikation zumindest eine graphische Benutzeroberfläche-jeweils mit deren zugehöriger kennzeichnender Kennung hinterlegt ist und
wobei die Chat-Applikation dazu ausgebildet ist, bei Empfang einer Kennung jeweils zumindest eine graphische Benutzeroberfläche anzuzeigen, deren Kennung der empfangenen Kennung entspricht.

3. Kommunikationssystem (100) nach Anspruch 1 oder 2, **dadurch gekennzeichnet, dass** die Analyse-Instanz (30) dazu ausgebildet ist, der eingegebenen Chat-Textnachricht vor dem Weiterleiten an die weitere Kommunikationsschnittstelle Metadaten in Form einer Software-Komponente hinzuzufügen, wobei die Chat-Applikation dazu ausgebildet ist, bei Empfang einer Software-Komponente eine entsprechende graphische Benutzeroberfläche anzuzeigen.

4. Kommunikationssystem (100) nach einem der vorangehenden Ansprüche, **dadurch gekennzeichnet,**
- **dass** die weitere Kommunikationseinheit ein Mobilgerät, insbesondere ein Smartphone (20) oder Tablet, ist und/oder
- **dass** von der Kommunikationseinheit aus eine Chat-Applikation aufrufbar ist, insbesondere dass auf der Kommunikationseinheit eine Chat-Applikation installiert ist,
wobei über die Chat-Applikation Chat-Textnachrichten an die weitere Kommunikationseinheit absetzbar sind und
wobei die Chat-Applikation vorzugsweise dazu ausgebildet ist, graphische Benutzeroberflächen im Chat darzustellen.

5. Kommunikationssystem (100) nach einem der vorangehenden Ansprüche, **dadurch gekennzeichnet,**
- **dass** die textbasierte Kommunikation eine textbasierte Notfallkommunikation ist und
- **dass** die Kommunikationseinheit in einem Operator-Arbeitsplatz (10) für eine Einsatzleitstelle umfasst ist,
- wobei die zumindest eine Kommunikationsschnittstelle dazu ausgebildet ist, Notrufe in Form von Chat-Textnachrichten von der weiteren Kommunikationseinheit zu empfangen und eingegebene Chat-Textnachrichten an die weitere Kommunikationseinheit zu senden,
- wobei über die Eingabeeinheit von einem Operator als erstem Benutzer Chat-Textnachrichten an den zweiten Benutzer eingebbar sind, und
- wobei auf der Anzeigeeinheit von der Kommunikationsschnittstelle empfangene Chat-Textnachrichten und vom Operator über die Eingabeeinheit eingegebene Chat-Textnachrichten anzeigbar sind.

6. Kommunikationssystem (100) nach Anspruch 5, **dadurch gekennzeichnet, dass**
- die weitere Kommunikationseinheit ein Mobilgerät, insbesondere ein Smartphone (20) oder Tablet ist,
- wobei über die vom Mobilgerät aus aufrufbare Chat-Applikation Notrufe in Form einer Chat-Textnachricht an die Einsatzleitstelle absetzbar sind und
- wobei das Mobilgerät zumindest eine Kommunikationsschnittstelle umfasst, die dazu ausgebildet ist, Notrufe in Form von eingegebenen Chat-Textnachrichten an die Kommunikationseinheit des Operator-Arbeitsplatzes (10) zu senden und Chat-Textnachrichten von der Kommunikationseinheit des Operator-Arbeitsplatzes (10) zu empfangen.

7. Kommunikationssystem (100) nach einem der vorangehenden Ansprüche, **dadurch gekennzeichnet, dass** die Analyse-Instanz (30) dazu ausgebildet ist, die über die weitere Eingabeeinheit eingegebenen Chat-Textnachrichten zu analysieren und basierend auf dieser Analyse in einem Speicher der Analyse-Instanz (30) und/oder in einem Speicher der ersten Kommunikationseinheit hinterlegte Chat-Textnachrichten, insbesondere hinterlegte Chat-Textnachrichten aus einem Fragenkatalog, und/oder Metadaten auf der weiteren Kommunikationseinheit darzustellender graphischer Benutzeroberflächen auszuwählen und an die weitere Kommunikationseinheit zu senden.

8. Kommunikationssystem (100) nach einem der vorangehenden Ansprüche, **dadurch gekennzeichnet, dass** die von der Chat-Applikation darzustellenden graphischen Benutzeroberflächen GUI-Widgets sind.

9. Kommunikationssystem (100) nach einem der vorangehenden Ansprüche, **dadurch gekennzeichnet, dass** die graphischen Benutzeroberflächen, insbesondere die GUI-Widgets, eines oder mehrere der folgenden Elemente umfassen:
- eine Ja/Nein-Frage,
- eine Datums- und/oder Zeit-Auswahl,
- einen Zahlenbereich,
- eine Mehr/Weniger-Frage,
- eine geographische Karte zur manuellen Auswahl einer Position über die weitere Eingabeeinheit,
- eine schematische Darstellung einer Person zur Auswahl eines Körperteils über die weitere Eingabeeinheit,
- ein Bild,
- ein Piktogramm,
- ein Video,
- eine Audiodatei zur Ausgabe über einen Lautsprecher der weiteren Kommunikationseinheit.

10. Kommunikationssystem (100) nach einem der vorangehenden Ansprüche, **dadurch gekennzeichnet, dass** die Analyse-Instanz (30) dazu ausgebildet ist, eine über die weitere Eingabeeinheit vom zweiten Benutzer vorgenommene Interaktion mit der graphischen Benutzeroberfläche im Chat festzustellen und die Interaktion mit der graphischen Benutzeroberfläche
- in eine der Interaktion entsprechende Chat-Textnachricht umzuwandeln und an die Kommunikationseinheit zu übermitteln und/oder
- der Interaktion entsprechende Metadaten zu erzeugen und an die Kommunikationseinheit zu übermitteln.

11. Kommunikationssystem (100) nach einem der vorangehenden Ansprüche, **dadurch gekennzeichnet, dass** die Chat-Applikation dazu ausgebildet ist, eine über die weitere Eingabeeinheit vom zweiten Benutzer vorgenommene Interaktion mit der graphischen Benutzeroberfläche im Chat festzustellen und die Interaktion mit der graphischen Benutzeroberfläche in eine der Interaktion entsprechende Chat-Textnachricht umzuwandeln und an die Kommunikationseinheit zu übermitteln.

12. Kommunikationssystem (100) nach einem der Ansprüche 4 bis 11, **dadurch gekennzeichnet, dass** die Chat-Applikation der Kommunikationseinheit dazu ausgebildet ist, von der Analyse-Instanz (30) übermittelte Metadaten zu verarbeiten und auf der Anzeigeeinheit (1) für den ersten Benutzer anzuzeigen.

13. Kommunikationssystem nach einem der vorangehenden Ansprüche, **dadurch gekennzeichnet, dass** die Kommunikationseinheit und/oder die Analyse-Instanz einen Speicher umfasst,
- wobei im Speicher graphische Benutzeroberflächen, insbesondere GUI-Widgets, mit deren zugehörigen kennzeichnenden Metadaten, insbesondere deren Kennung, hinterlegt sind,
- wobei bei Eingabe einer Chat-Textnachrichten vom ersten Benutzer über die Eingabeeinheit im Speicher hinterlegte graphische Benutzeroberflächen wählbar sind und
- wobei die Analyse-Instanz dazu ausgebildet ist, bei Auswahl zumindest einer graphischen Benutzeroberfläche über die Eingabeeinheit der eingegebenen Chat-Textnachricht eine der zumindest einen gewählten graphischen Benutzeroberfläche entsprechende Metadaten hinzuzufügen, insbesondere der eingegebenen Chat-Textnachricht eine Kennung und/oder Software-Komponente hinzuzufügen, die der gewählten graphischen Benutzeroberfläche entspricht.

14. Kommunikationssystem nach einem der vorangehenden Ansprüche, **dadurch gekennzeichnet, dass** die Analyse-Instanz
- in der Kommunikationseinheit integriert ist, oder
- auf einem externen Server untergebracht ist, oder
- in der weiteren Kommunikationseinheit integriert ist.
